# EUROPÄISCHE PATENTSCHRIFT

(11) **EP 0 938 011 B1**
(45) Veröffentlichungstag und Bekanntmachung des Hinweises auf die Patenterteilung: **24.07.2002**
(21) Anmeldenummer: 99102177.5
(22) Anmeldetag: 04.02.1999
(51) Int. Cl.: G02B 13/14

(54) **Achrathermer Reimager**
Achrathermal reimager
Dispositif d'imagerie achrathermique

(30) Priorität: 20.02.1998 DE 19807093
(43) Veröffentlichungstag der Anmeldung: 25.08.1999
(73) Patentinhaber: Zeiss Optronik GmbH, 73447 Oberkochen (DE)
(72) Erfinder: Ulrich, Wilhelm, 73434 Aalen-Dewangen (DE); Gängler, Dietmar, 89129 Langenau (DE)
(74) Vertreter: Gnatzig, Klaus

(56) Entgegenhaltungen:
- EP-A- 0 783 121
- US-A- 5 691 847

## Beschreibung

Die Erfindung betrifft einen achrathermen Reimager, bestehend aus einem Frontobjektiv und einer Relaisoptik.

In Wärmebildgeräten, die als Zielgeräte verwendet werden, ist eine Bildlagenstabilität über einen größeren Temperaturbereich notwendig (z.B. ± 50° C). Um dies zu erreichen wird ein athermaler Imager benötigt, dessen Brennweite und Schnittweite konstant bleibt. Dies kann entweder durch Nachfokussieren mit Hilfe von Motoren und elektronischer Steuerung realisiert werden, wodurch sich zwar die Schnittweite einstellen läßt, aber i.a. gleichzeitig die Brennweite geändert wird, oder durch einen achrathermen Imager, der über einen breiten Temperaturbereich innerhalb des beugungsbegrenzten Schärfentiefebereichs bleibt. Die zweite Lösung ist preisgünstiger zu realisieren und hat den Vorteil, daß die Brennweite nahezu konstant bleibt.

Aus der Patentanmeldung EP 0 783 121 A2 ist bereits ein solcher Imager mit einem Bildfeld von 2 x 7.65° bekannt. Da für heutige Anwendungen ein deutlich größeres Bildfeld von etwa 2 x 10° benötigt wird, ist die Bildfeldebnung nicht ausreichend. Der Lichtleitwert von 1.7 des Imagers nach der Patentanmeldung EP 0 783 121 A2 ist außerdem zu klein, so daß keine ausreichende Korrektur der Petzvalsumme möglich ist.

Aus der US 5,691,847 ist ein athermalisiertes und achromatisiertes optisches System bekannt. Dieses optische System weist eine Meniskenlinse und zumindestens eine Positivlinse sowie eine planparallele Platte aus Germanium auf. In einer Zwischenbildebene ist eine Blende angeordnet. Zwischen der Meniskenlinse und der Positivlinse kann eine Negativlinse vorgesehen sein. Zumindestens eine Linse ist mit einem defraktiven Element versehen. Dieser Schrift ist weiterhin zu entnehmen, daß für eine Reduzierung der von jeder Linse erforderlichen Brechkraft es vorteilhaft ist, drei verschiedene Linsenmaterialien zu verwenden. Die Korrektur der chromatischen Fehler wird durch defraktive optische Elemente gewährleistet.

Der Erfindung liegt die Aufgabe zugrunde achratherme Reimager zu schaffen, die kompakt angeordnet werden können und die eine verbesserte Abbildungsqualität aufweisen.

Die Aufgabe der Erfindung wird durch die in den Patentansprüchen 1 und 2 gegebenen Merkmale gelöst.

Das Frontobjektiv besteht demnach aus höchstens drei Linsen aus lediglich zwei unterschiedlichen Materialien (entweder ZnS und Chalkogenid oder ZnSe und Chalkogenid, insbesondere IG6 oder IG4 der Firma Vitron). Die erste Linse des Frontobjektivs ist jeweils eine dicke Meniskuslinse. Dessen Radienverhältnis R₁/R₂ liegt zwischen 0.25 und 1.0. Dabei ist das Frontobjektiv selber achratherm. Zwischen dem Frontobjektiv und der Relaisoptik steht genügend Platz zur Verfügung, so daß für eine zweifache Strahlablenkung genügend Platz zur Verfügung steht.

Um Narziß-Effekte zu unterdrücken ist die nach der Narzißblende angeordnete kippbare Planplatte um > 1° < 5° senkrecht zur Kipprichtung eingebaut worden.

Der Radius R1 (Meniskus) ist hohl und es gilt |R1 / f'| < 1, wobei f' die Brennweite der Meniskuslinse ist.

Einzelheiten der Erfindung ergeben sich aus den Unteransprüchen und der Beschreibung, in der anhand der Zeichnung fünf Ausführungsbeispiele beschrieben werden. Es zeigen
- Fig. 1: einen sechslinsigen achrathermen Reimager in abgewinkelter Ausführung mit Umlenkspiegeln,
- Fig. 2: einen sechslinsigen achrathermen Reimager in gestreckter Ausführung (ohne Umlenkspiegel),
- Fig. 3: die Beugungs- Modulationstransferfunktion für den Gegenstand von Fig. 1 bzw. 2,
- Fig. 4: einen fünflinsigen achrathermen Reimager in abgewinkelter Ausführung mit Umlenkspiegeln,
- Fig. 5: die Beugungs- Modulationstransferfunktion für den Gegenstand von Fig. 4,
- Fig. 6: einen fünflinsigen achrathermen Reimager in abgewinkelter Ausführung mit Umlenkspiegeln in einer abgewandelten Ausführung,
- Fig. 7: die Beugungs- Modulationstransferfunktion für den Gegenstand von Fig. 6,
- Fig. 8: einen fünflinsigern achrathermern Reimager in abgewinkelter Ausführung mit Umlenkspiegeln in einer weiteren Ausführung,
- Fig. 9: die Beugungs- Modulationstransferfunktion für den Gegenstand von Fig. 8,
- Fig. 10: einen fünflinsigern achrathermern Reimager in abgewinkelter Ausführung mit Umlenkspiegeln in einer weiteren Ausführung,
- Fig. 11: die Beugungs- Modulationstransferfunktion für den Gegenstand von Fig. 10.

Im folgenden beziehen sich R₁ und R₂ immer auf die Radien der ersten Linse des Frontobjektivs. In den aufgeführten Tabellen sind dies die Flächen 4 und 5. Im übrigen gelten die gleichen allgemeinen Ausführungen, wie sie aus der EP 0783 121 A1 bekannt sind.

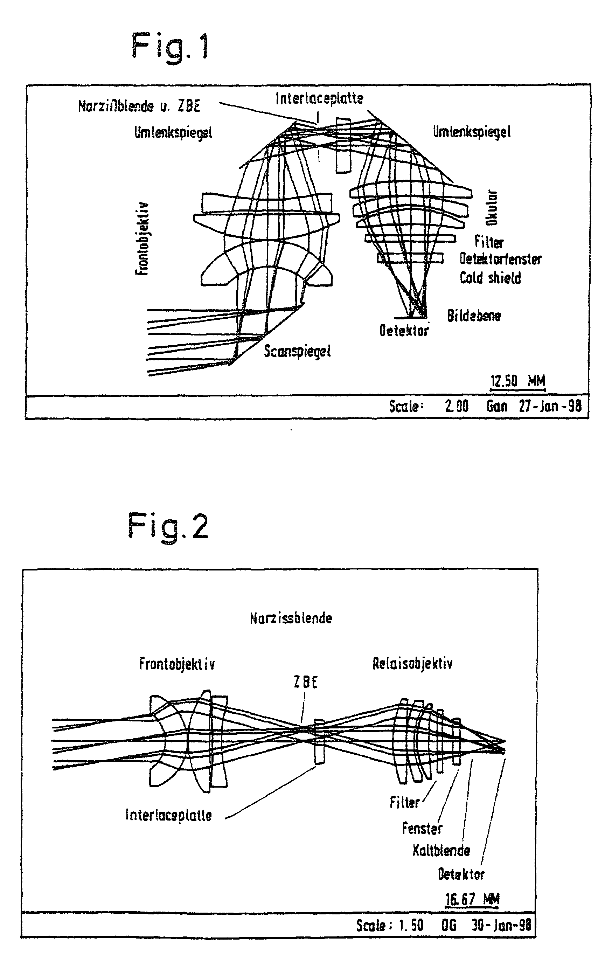

Der in Fig. 1 dargestellte sechslinsige achratherme Reimager besteht aus dem Frontobjektiv und der Relaisoptik (auch als Okular bezeichnet). In der Bildebene ist ein IR-Zeilendetektor angeordnet. Er wird gekühlt und sitzt zur Isolation in einem nicht dargestellten Dewargefäß, das mit einem Fenster aus Germanium mit zwei planparallelen Flächen abgeschlossen ist. Zusätzlich ist eine Filterscheibe aus ZnSe eingebaut.

Der Reimager ist aus bautechnischen Gründen zweifach abgewinkelt. Dies impliziert, daß genügend Bauraum zwischen den beiden Objektiven vorhanden sein muß, um zwei Umlenkspiegel anbringen zu können.

In der Austrittspupille liegt eine gekühlte Aperturblende (cold shield).

Eine Narziß-Blende ist in der Zwischenbildebene angeordnet. Um Narziß-Effekte durch die in der Nähe der Zwischenbildebene liegende Interlaceplatte zu verringern, wird die Interlaceplatte leicht schief eingebaut.

Das Frontobjektiv besteht aus einer dicken Meniskuslinse und einer positiven Linse aus dem Chalkongenidglas IG6 der Firma Vitron, Jena, sowie einer Negativlinse aus ZnSe mit einer Asphäre auf der Frontfläche.

Die dreilinsige Relaisoptik besteht aus zwei positiven IG6-Linsen und einer negativen Linse aus ZnS mit asphärischer Frontfläche.

In diesem Beispiel wurden bewußt Asphären auf dem Chalkogenidglas IG6 vermieden.

Aus der Tabelle 1 sind die Radien, Asphärendaten, Abstände und Glasmaterialien für das Beispiel 1 zu entnehmen.

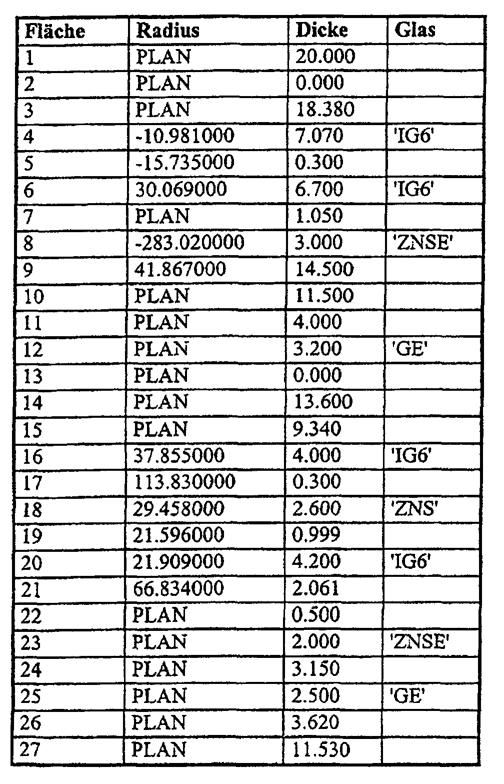

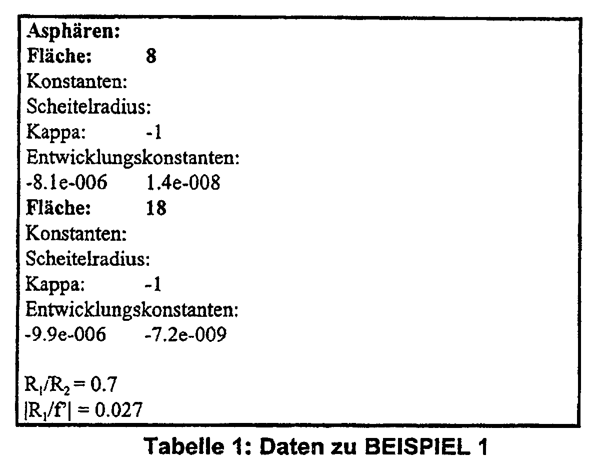

In der Figur 2 ist der Gegenstand von Beispiel 1 in der gestreckten Version dargestellt, d. h. ohne Umlenkspiegel.

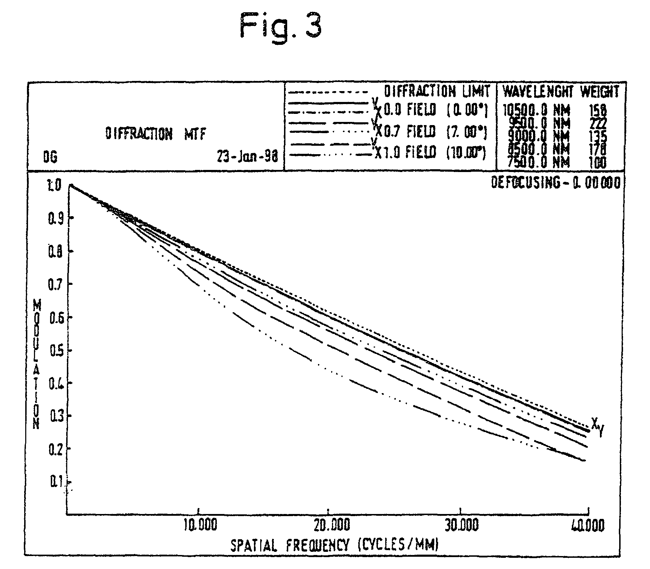

In der Figur 3 ist die für dieses Ausführungsbeispiel erreichte Beugungs-Modulationstransferfunktion dargestellt. Der tangentiale und radiale Kontrast ist bis 70% des Maximalfeldes nahezu beugungsbegrenzt. Lediglich für das maximale Feld tritt ein Kontrastabfall auf.

In den Figuren 3, 5, 7, 9 und 11, die jeweils die Beugungs-Modulationstransferfunktion des jeweiligen Ausführungsbeispiels 1 bis 5 zeigen, erfolgte die Beschriftung seitens der Meßanlage in englischer Sprache. Die Bedeutung der wichtigsten Bezeichnung ist folgende:

| | |
|---|---|
| Diffraction MTF | Beugungs-Modulationstransferfunktion |
| Spatial Frequency (Cycles/mm) | Ortsfrequenz (LPM) |
| Diffraction Limit | Beugungsgrenze |
| Field () | relative Feldhöhe (Bildwinkel) |
| Wavelenght/Weight | Wellenlänge/Gewichtung |

Die weiteren Beispiele kommen mit nur 5 Linsen aus. Hierbei wurden auch Asphären auf den Chalkogenidgläsern, speziell IG6, zugelassen.

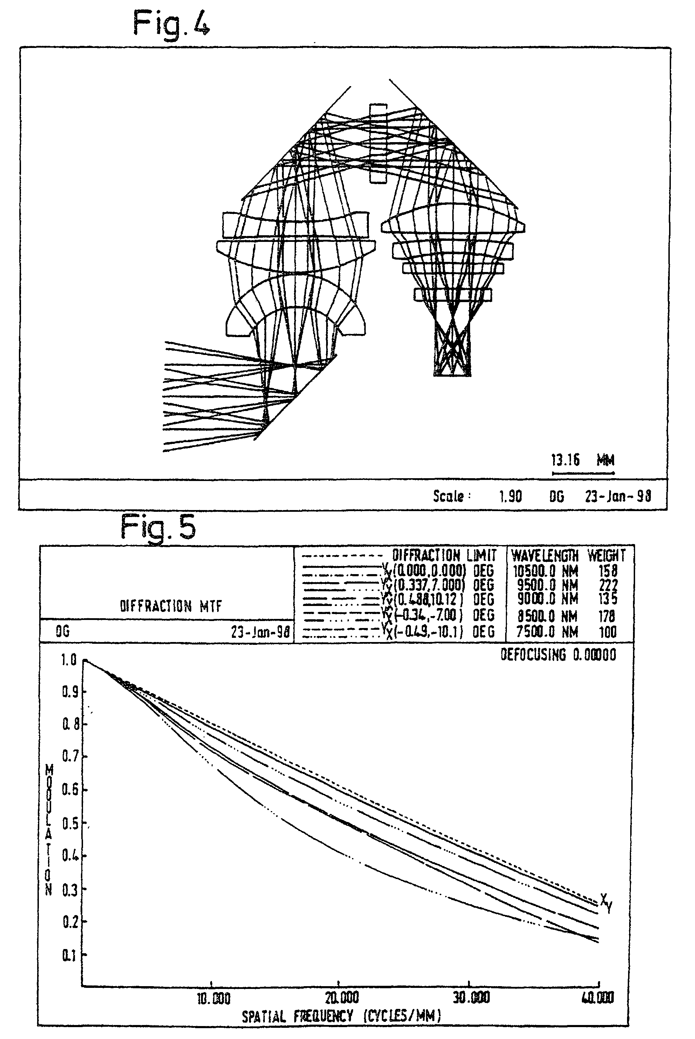

Die Fig. 4 zeigt ein solches Beispiel 2. Die Daten dazu sind in der Tabelle 2 wiedergegeben. Das Frontobjektiv besteht wiederum aus 3 Linsen (IG6, IG6 und ZnSe) mit der typischen Meniskuslinse als Frontlinse. Die Asphäre sitzt wiederum auf der Frontseite der ZnSe Linse.

Das Okular besteht aus einer positiven IG6 Linse (mit Asphäre auf der Frontfläche), sowie einer ZnS Linse.

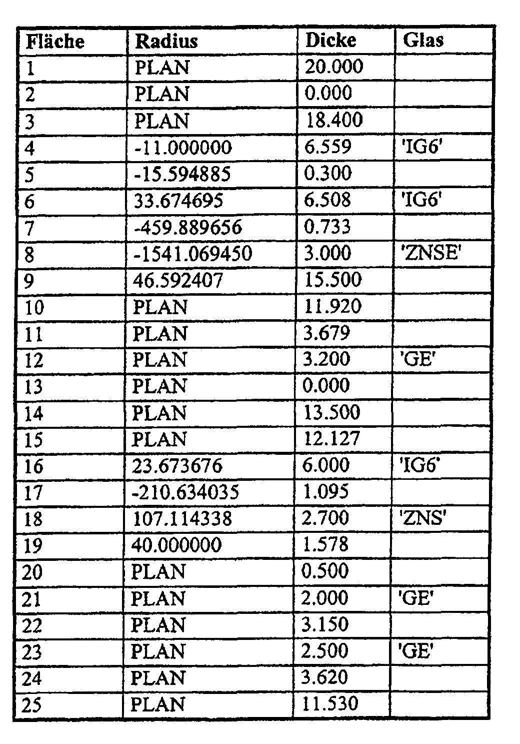

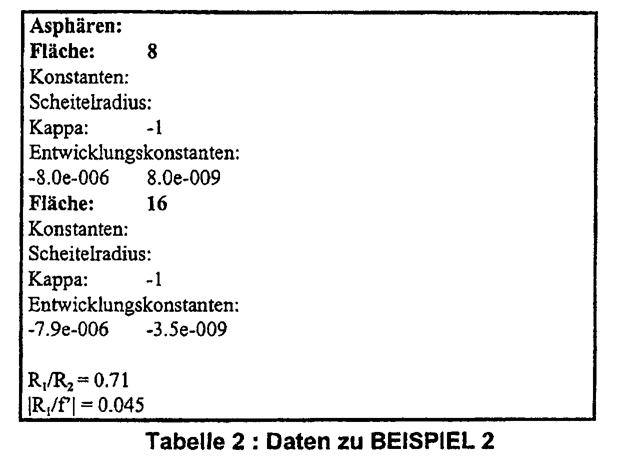

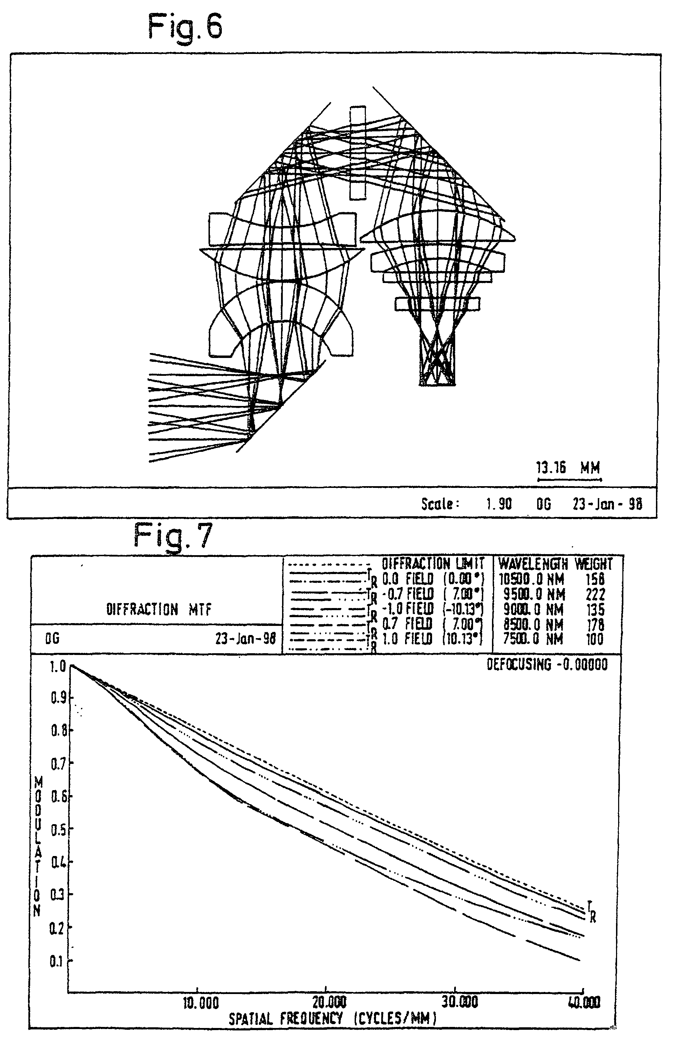

Die Figur 6 zeigt eine Ausführung mit einem Frontobjektiv aus ZnSe, IG6 und ZnSe. Die Asphäre sitzt wieder auf der Frontseite der ZnSe-Linse.

Das Okular besteht aus einer IG6 Linse (mit Asphäre) und einer ZnS Linse.

Die Daten sind der Tabelle 3 zu entnehmen.

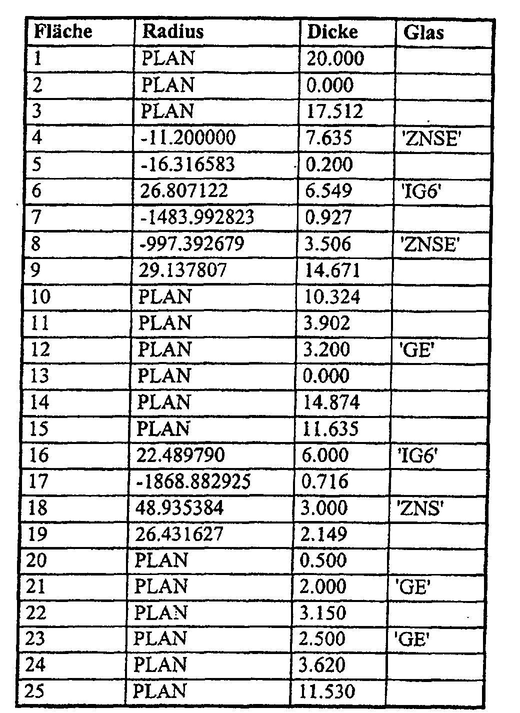

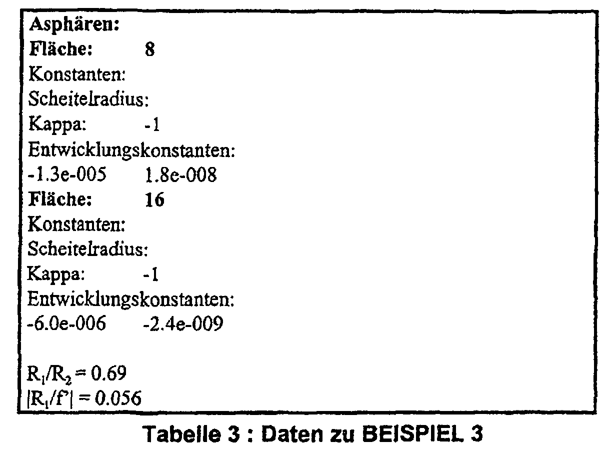

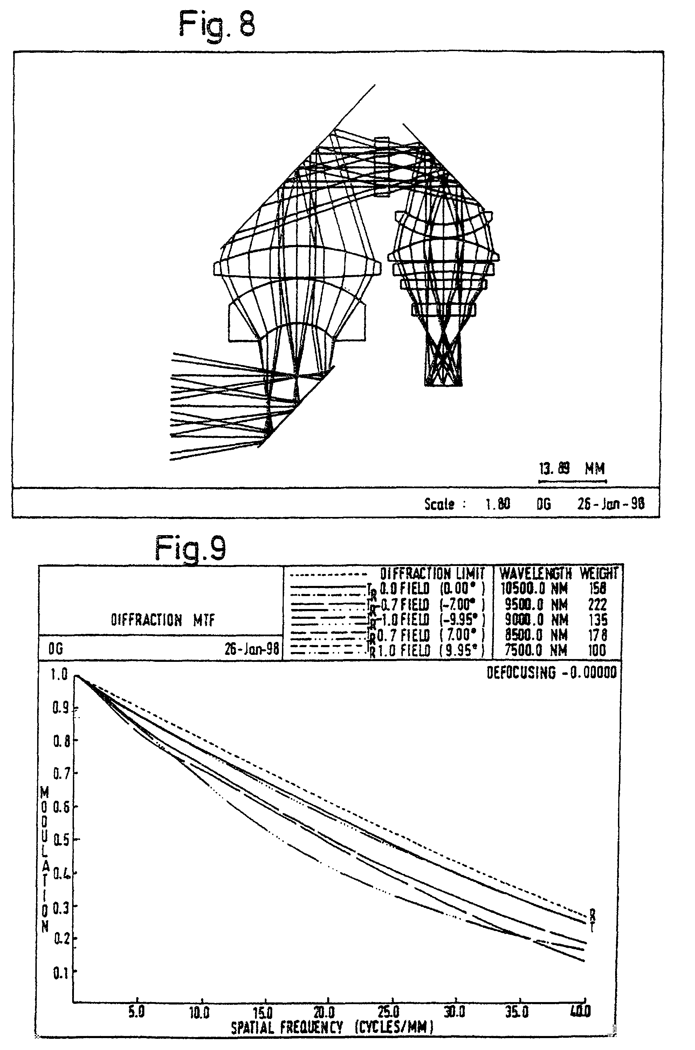

Das Beispiel 4 ist in den Figuren 8 und 9 wiedergegeben; die Daten dazu sind in Tabelle 4 enthalten.

Die Figur 8 zeigt ein Beispiel mit einem zweilinsigen Frontobjektiv aus ZnS und IG6. Die Asphäre liegt auf der Rückseite der Chalkogenidlinse.

Das Okular besteht aus zwei ZnS Linsen, zwischen denen eine IG6 Linse mit Asphäre eingefügt ist. Im Reimager werden also nur zwei unterschiedliche Materialien verwendet.

Bei diesem und dem folgenden Beispiel liegt die Zwischenbildebene hinter der Interlaceplatte. Dies hat den Vorteil, daß Narziß-Effekte, verursacht durch die sich drehende Interlaceplatte, mit Hilfe einer Narziß-Blende in der Zwischenbildebene teilweise verhindert werden.

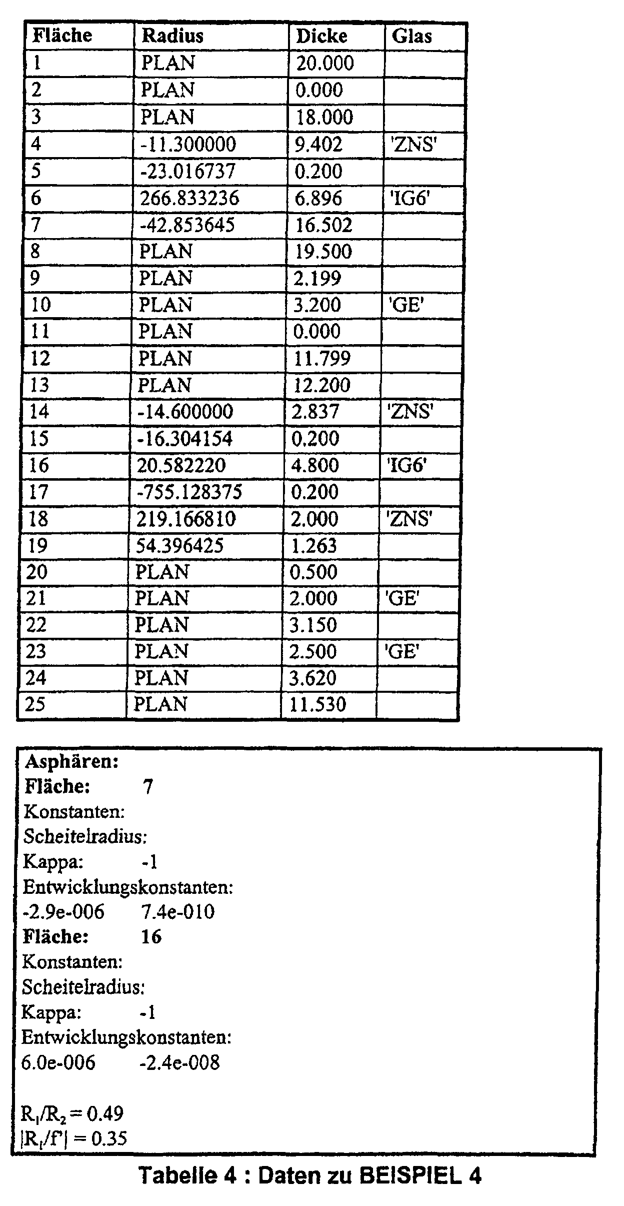

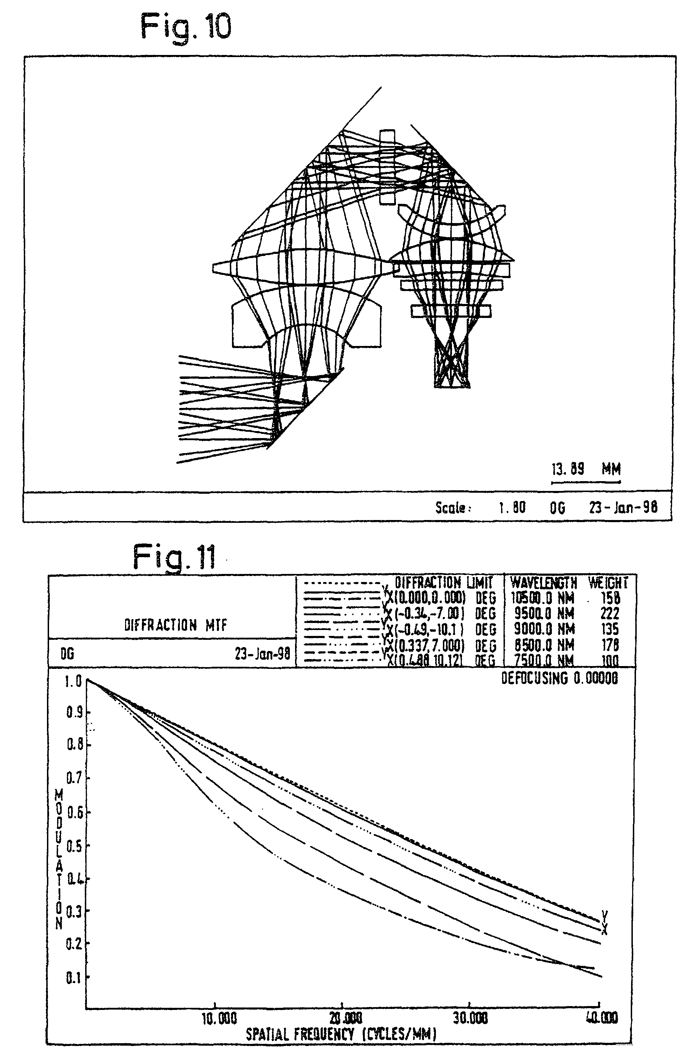

Im letzten Beispiel 5 - siehe Figuren 10 und 11 und Tabelle 5 wurde die Meniskuslinse aus ZnS durch eine Meniskuslinse aus ZnSe mit asphärischer Frontfläche ersetzt.

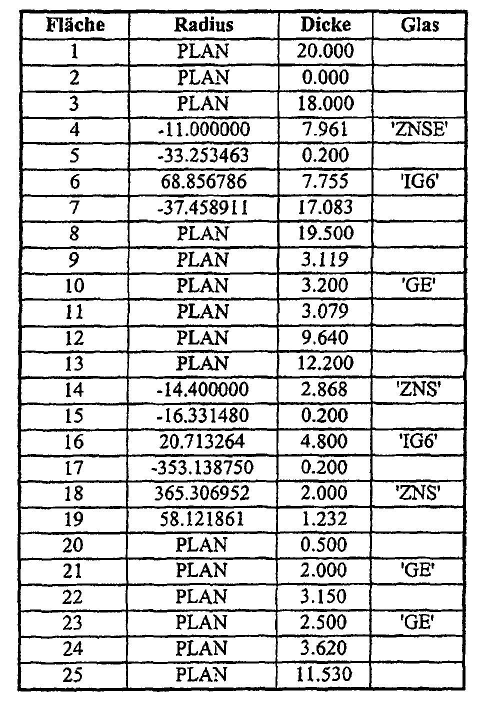

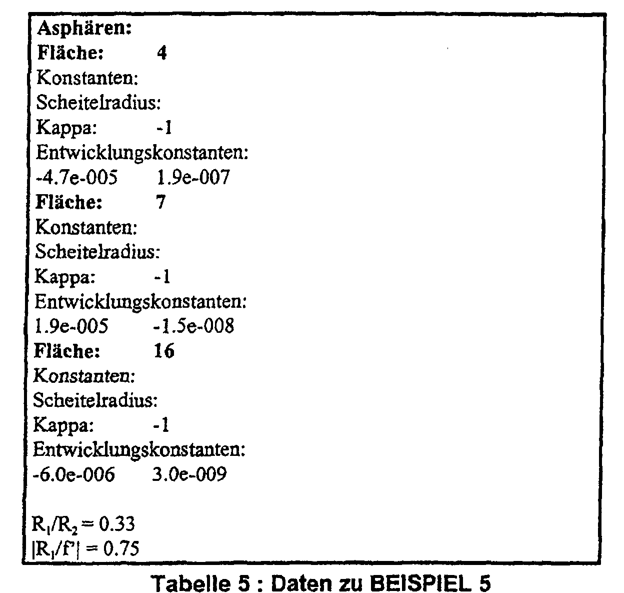

Für die beschriebenen Beispiele gilt:

Die Brennweite beträgt f= 22.5 mm, die Öffnungszahl 1.7, der Eintrittspupillendurchmesser ist 13.2, die bildseitige numerische Apertur NA' = 0.294. Die Länge von der Detektorebene bis zur Eintrittsfläche des Ge-Eintrittsfensters beträgt 11.53 mm, der halbe objektseitige Feldwinkel w'=10°.

Damit sind die eingangs dargelegten Ziele erreicht.

## Patentansprüche

1. Achrathermer Reimager, bestehend aus einem achrathermen Frontobjektiv mit einer positiven Meniskenlinse und mit einer Positivlinse sowie einer Relaisoptik, **dadurch gekennzeichnet, daß** zwischen dem Frontobjektiv und der Relaisoptik ausreichend Platz zur Verfügung steht, so daß eine zweifache Strahlablenkung möglich ist, wobei die Meniskuslinse ein Radienverhältnis von 0,25 < R1 / R2 < 1,0 aufweist.

2. Achrathermer Reimager nach dem Oberbegriff des Anspruchs 1, wobei zwischen Frontobjektiv und Relaisoptik eine Narzißblende angeordnet ist, **dadurch gekennzeichnet, daß** nach der Narzißblende eine kippbare Platte, um Narziß-Effekte zu unterdrücken, angeordnet ist, die senkrecht zur Kipprichtung um einem Winkel zwischen 1° und 5° gekippt eingebaut ist.

3. Reimager nach Anspruch 1 oder 2, **dadurch gekennzeichnet, daß** |R₁ / f | < 1 gilt, wobei R₁ der vordere hohle Radius der Meniskuslinse ist und f' die Brennweite der Meniskuslinse ist.

4. Achrathermer Reimager nach Anspruch 1, **dadurch gekennzeichnet, daß** zwischen Frontobjektiv und Relaisoptik eine Narzißblende, die in der Zwischenbildebene angeordnet ist, und hinter der Narzißblende eine kippbare Planplatte angeordnet ist, wobei die Planplatte, um Narziß-Effekte zu unterdrücken, senkrecht zur Kipprichtung um einem Winkel zwischen 1° und 5° gekippt eingebaut ist.

5. Achrathermer Reimager nach Anspruch 1 oder 2, **dadurch gekennzeichnet, daß** das Frontobjektiv drei Linsen umfaßt.

6. Reimager nach Anspruch 3, **dadurch gekennzeichnet, daß** die Linsen des Frontobjektives aus nur zwei verschiedenen Materialien bestehen.

7. Reimager nach Anspruch 6, **dadurch gekennzeichnet, daß** alle Linsen nur aus zwei Materialien bestehen.

8. Reimager nach Anspruch 3, Anspruch 6 oder Anspruch 7, **dadurch gekennzeichnet, daß** die Positivlinse des Frontobjektivs aus Chalkogenidglas besteht, wobei das Frontobjektiv weiterhin eine Negativlinse aus ZnSe oder ZnS aufweist und die Relaisoptik aus mindestens einer Positivlinse und einer Negativlinse aus ZnSc oder ZnS besteht.

9. Reimager nach Anspruch 8, **dadurch gekennzeichnet, daß** mindestens zwei asphärische Linsenoberflächen vorgesehen sind, wobei nur die Negativlinsen die asphärischen Linsenoberflächen aufweisen.

## Claims

1. Achrathermal reimager, comprising an achrathermal front objective lens with a positive meniscus lens and with a positive lens as well as a relay optics, **characterized in that** sufficient space is available between the front objective lens and the relay optics for two-fold deflection to be possible, the meniscus lens having a radius ratio of 0.25 < R1/R2 < 1.0.

2. Achrathermal reimager according to the preamble of Claim 1, a narcissus stop being arranged between the front objective lens and relay optics, **characterized in that**, in order to suppress narcissus effects, there is arranged downstream of the narcissus stop a tiltable plate which is installed tilted by an angle of between 1° and 5° perpendicular to the tilting direction.

3. Reimager according to Claim 1 or 2, **characterized in that** it holds that |R₁/f⁶| < 1, R₁ being the front hollow radius of the meniscus lens, and f⁶ being the focal length of the meniscus lens.

4. Achrathermal reimager according to Claim 1, **characterized in that** arranged between the front objective lens and relay optics is a narcissus stop which is arranged in the intermediate image plane, and a tiltable plane plate is arranged downstream of the narcissus stop, the plane plate being installed, in order to suppress narcissus effects, tilted by an angle of between 1° and 5° perpendicular to the tilting direction.

5. Achrathermal reimager according to Claim 1 or 2, **characterized in that** the front objective lens comprises three lenses.

6. Reimager according to Claim 3, **characterized in that** the lenses of the front objective lens consist of only two different materials.

7. Reimager according to Claim 6, **characterized in that** all the lenses consist of only two materials.

8. Reimager according to Claim 3, Claim 6 or Claim 7, **characterized in that** the positive lens of the front objective lens consists of chalcogenide glass, the front objective lens further having a negative lens made from ZnSe or ZnS, and the relay optics comprising at least one positive lens and one negative lens made from ZnSc or ZnS.

9. Reimager according to Claim 8, **characterized in that** at least two aspherical lens surfaces are provided, only the negative lenses having the aspherical lens surfaces.

## Revendications

1. Reimager achromatisé et athermique, composé d'un objectif frontal achromatisé et athermique avec une lentille méniscale positive et avec une lentille positive ainsi qu'une optique relais, **caractérisé en ce qu'**il existe suffisamment de place entre l'objectif frontal et l'optique relais pour permettre un double balayage du faisceau, la lentille méniscale présentant ici un rapport de rayon de 0,25 < R1/R2 < 1,0.

2. Reimager achromatisé et athermique selon le préambule de la revendication 1, un obturateur narcissique étant disposé entre l'objectif frontal et l'optique relais, **caractérisé en ce qu'**une plaque basculante destinée à atténuer les effets narcissiques est disposée après l'obturateur narcissique, laquelle est montée basculée perpendiculairement au sens de basculement selon un angle compris entre 1° et 5°.

3. Reimager selon la revendication 1 ou 2, **caractérisé en ce que** |R₁/f'| < 1 est vérifié, R₁ désignant le rayon creux avant de la lentille méniscale et f' la distance focale de la lentille méniscale.

4. Reimager achromatisé et athermique selon la revendication 1, **caractérisé en ce qu'**un obturateur narcissique qui est disposé dans le plan de l'image intermédiaire est logé entre l'objectif frontal et l'optique relais, et une plaque plane basculante est disposée derrière l'obturateur narcissique, la plaque plane étant montée basculée perpendiculairement au sens de basculement selon un angle compris entre 1° et 5° afin d'atténuer les effets narcissiques.

5. Reimager achromatisé et athermique selon la revendication 1 ou 2, **caractérisé en ce que** l'objectif frontal comprend trois lentilles.

6. Reimager selon la revendication 3, **caractérisé en ce que** les lentilles de l'objectif frontal ne se composent que de deux matériaux différents.

7. Reimager selon la revendication 6, **caractérisé en ce que** toutes les lentilles ne se composent que de deux matériaux.

8. Reimager selon la revendication 3, la revendication 6 ou la revendication 7, **caractérisé en ce que** la lentille positive de l'objectif frontal se compose de verre chalcogène, l'objectif frontal présentant en plus une lentille négative en ZnSe ou en ZnS et l'optique relais se composant d'au moins une lentille positive et d'une lentille négative en ZnSc ou en ZnS.

9. Reimager selon la revendication 8, **caractérisé en ce qu'**au moins deux surfaces de lentille non-sphériques sont prévues, seules les lentilles négatives présentant les surfaces de lentille non-sphériques.
